# EUROPÄISCHE PATENTANMELDUNG

(11) **EP 2 521 247 A1**
(43) Veröffentlichungstag der Anmeldung: **07.11.2012**
(21) Anmeldenummer: 11165111.3
(22) Anmeldetag: 06.05.2011
(51) Int. Cl.: H02K 3/30, H02K 3/40

(54) **Elektrisches Glimmschutzsystem für eine Hochspannungsmaschine**

(71) Anmelder: SIEMENS AKTIENGESELLSCHAFT, 80333 München (DE)
(72) Erfinder: Brockschmidt, Mario, 45131, Essen (DE); Kempen, Stefan, 44388, Dortmund (DE); Pohlmann, Friedhelm, 45355, Essen (DE); Schmidt, Guido, 42799, Leichlingen (DE)

(57) **Zusammenfassung**

Das Glimmschutzsystem (9) für eine Hochspannungsmaschine weist einen Umhüllkörper für einen stromführenden Leiter (3) der Hochspannungsmaschine auf, wobei der Umhüllkörper ein Basisharz aufweist, dem mindestens eine Partikel aufweisende Füllstoffkomponente zugesetzt ist, wobei die Partikel der mindestens einen Füllstoffkomponente eine nanoskalige Dimension haben.

## Beschreibung

Die Erfindung betrifft ein elektrisches Glimmschutzsystem für eine Hochspannungsmaschine.

Eine Hochspannungsmaschine, wie beispielsweise ein Turbogenerator in einem Kraftwerk zur Erzeugung von elektrischer Energie, ist einer hohen mechanischen, thermischen und elektrischen Beanspruchung ausgesetzt. Der Turbogenerator weist insbesondere einen Turbogeneratorständer mit einem Ständerblechpaket und eine Mehrzahl an Generatorwicklungsstäben auf, die elektrische Leiter sind. Das Ständerblechpaket weist eine Mehrzahl an Nuten auf, in denen die Leiter gelagert sind. Die Leiter stehen dabei aus dem Ständerblechpaket hervor. Das elektrische Isolationssystem umhüllt jeden Leiter und hat den Zweck, jeden Leiter gegen benachbarte Leiter, gegen das Ständerblechpaket und gegen die Umgebung elektrisch zu isolieren. Das Isolationssystem weist eine Hauptisolation auf, welche den Leiter umhüllt und Grenzflächen mit dem Ständerblechpaket und dem Leiter bildet. Durch thermische oder mechanische Beanspruchungen beim Betrieb der Hochspannungsmaschine kann die Hauptisolation an diesen Grenzflächen abheben, wodurch sich Hohlräume bilden. In diesen Hohlräumen können sich bei hohen Betriebsspannungen Funken ausbilden, die durch elektrische Grenzflächenteilentladungen hervorgerufen sind. Diese elektrische Beanspruchung der Hauptisolation kann zu deren Beschädigung führen.

Zur Vermeidung von Grenzflächenteilentladungen an der Grenzfläche zwischen der Hauptisolation und dem Leiter kann eine schwach leitende innere Potentialsteuerung vorgesehen sein. Zur Vermeidung von Grenzflächenteilentladungen an der Grenzfläche zwischen der Hauptisolation und dem Ständerblechpaket ist ein schwach leitender und geerdeter Außenglimmschutz vorgesehen, welcher die Hauptisolation umhüllt. Die elektrische Feldstärke wird ausgehend von der inneren Potentialsteuerung in Richtung zum Außenglimmschutz hin innerhalb der Hauptisolation abgebaut. Der Außenglimmschutz erstreckt sich ausgehend vom Ständerblechpaket nicht über die vollständige Länge der Hauptisolation. Zur Vermeidung von Grenzflächenteilentladungen am Ende des Außenglimmschutzes wird der Abbau des elektrischen Feldes durch das Vorsehen eines Endenglimmschutzes vergleichmäßigt. Der Endenglimmschutz erstreckt sich von dem dem Ständerblechpaket abgewandten Ende des Außenglimmschutzes und bedeckt eine Teillänge der nicht mit Außenglimmschutz umhüllten Hauptisolation. Zur Vergleichmäßigung der Feldstärke ist der Endenglimmschutz mit einem Material ausgebildet, das bei zunehmender Spannung, d.h. elektrischer Feldstärke, einen abnehmenden elektrischen Widerstand hat. Der Endenglimmschutz bewirkt somit eine Feldsteuerung. Der Außenglimmschutz und der Endenglimmschutz bilden ein Glimmschutzsystem.

Als Folge von fehlerhaftem Aufbringen des Glimmschutzsystems auf die Isolation, als Folge von Alterung, insbesondere durch thermische Belastung, oder als Folge von Verschmutzung der Oberfläche des Glimmschutzsystems kann es zu Grenzflächenteilentladungen kommen. Ebenfalls kann es während einer Hochspannungsprüfung der Hochspannungsmaschine zu Grenzflächenteilentladungen kommen. Als Folge der Grenzflächenteilentladungen kann es zu einer Zerstörung der organischen Komponenten des Glimmschutzsystems kommen. Bei fortschreitender Zerstörung der organischen Komponenten nimmt die Fähigkeit des Glimmschutzsystems ab, Grenzflächenteilentladungen zu vermeiden, wodurch sich die Zerstörung des Glimmschutzsystems beschleunigt. Dadurch ist die Lebensdauer des Glimmschutzsystems reduziert.

Aufgabe der Erfindung ist es, ein Glimmschutzsystem zu schaffen, welches eine hohe Beständigkeit gegenüber Grenzflächenteilentladungen hat, wodurch die Lebensdauer des Glimmschutzsystems lang ist.

Das erfindungsgemäße Glimmschutzsystem für eine Hochspannungsmaschine weist einen Umhüllkörper für einen stromführenden Leiter der Hochspannungsmaschine auf, wobei der Umhüllkörper ein Basisharz aufweist, dem mindestens eine Partikel aufweisende Füllstoffkomponente zugesetzt ist, wobei die Partikel der mindestens einen Füllstoffkomponente eine nanoskalige Dimension haben.

Treten Grenzflächenteilentladungen auf, so wird das erfindungsgemäße Glimmschutzsystem mit den Nanopartikeln im Basisharz durch die Teilentladungen vorteilhaft weniger zerstört als ein Glimmschutzsystem ohne Nanopartikel im Basisharz, wodurch sich vorteilhaft eine längere Lebensdauer des Glimmschutzsystems mit den Nanopartikeln im Basisharz ergibt.

Das Glimmschutzsystem weist bevorzugt einen Lack auf, der das Basisharz aufweist. Alternativ weist das Glimmschutzsystem bevorzugt ein poröses Band auf, das von dem Basisharz durchtränkt ist.

Das Basisharz ist bevorzugt als ein Gießharz verwendet. Alternativ ist das Basisharz bevorzugt als ein Tränkharz verwendet. Ferner ist das Basisharz bevorzugtermaßen ein Epoxidharz mit einem Anhydrid als Härter.

Die Partikel weisen bevorzugt ein Metalloxid oder ein Halbmetalloxid auf, insbesondere Titandioxid, Aluminiumoxid oder Siliziumdioxid. Dabei sind die Partikel bevorzugtermaßen durch ein flammenpyrolytisches Verfahren hergestellt. Alternativ sind die Partikel bevorzugtermaßen in situ im Basisharz oder in situ in einer Komponente des Basisharzes hergestellt. Ferner sind der Füllstoff und dessen Konzentration bevorzugt so gewählt, dass die Mischung aus dem Basisharz und dem Füllstoff ein vorherbestimmtes Fließverhalten hat, das an ein Herstellungsverfahren für das Glimmschutzsystem anpassbar ist.

Bevorzugtermaßen ist das Glimmschutzsystem ein Außenglimmschutz. Alternativ ist das Glimmschutzsystem bevorzugtermaßen ein Endenglimmschutz. Bevorzugtermaßen weist der Endenglimmschutz mindestens zwei Füllstoffkomponenten auf, wobei die Partikel mindestens einer der anderen Füllstoffkomponenten bevorzugtermaßen ein halbleitendes Material aufweisen, insbesondere Siliziumcarbid.

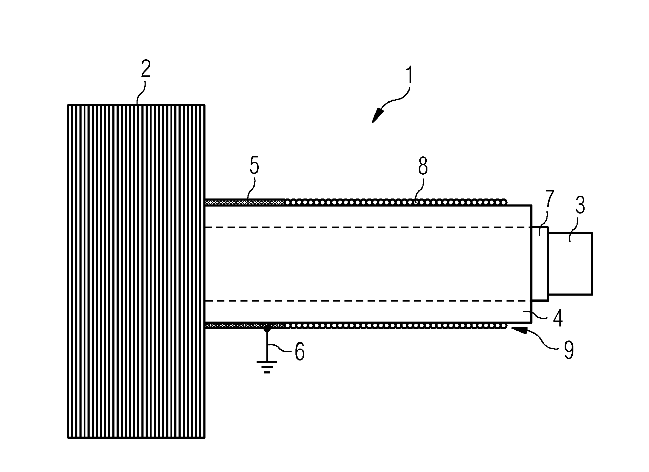

Im Folgenden wird anhand der beigefügten schematischen Zeichnung die Erfindung näher erläutert. Die Figur zeigt einen Längsschnitt eines Turbogeneratorständers mit den erfindungsgemäßen Glimmschutzsystemen.

Wie es aus der Figur ersichtlich ist, weist ein Turbogeneratorständer 1 ein Ständerblechpaket 2 auf, aus dem ein Generatorwicklungsstab 3 vorsteht. Der Generatorwicklungsstab 3 ist mit einer Hauptisolation 4 umgeben, wobei der Wicklungsstab 3 mit seiner Hauptisolation 4 und mit seinem einen Ende außerhalb des Ständerblechpakets 2 angeordnet ist. Im Bereich der Austrittsstelle des Wicklungsstabs 3 aus dem Ständerblechpaket 2 ist ein Außenglimmschutz 5 vorgesehen, der die Hauptisolation 4 ummantelt und mit einer Erdung 6 geerdet ist. Außerdem ist zwischen dem Generatorwicklungsstab 3 und der Hauptisolation 4 eine innere Potentialsteuerung 7 vorgesehen. Ausgehend von dem dem Ständerblechpaket 2 abgewandten Ende des Außenglimmschutzes 5 umhüllt der Endenglimmschutz 8 die Hauptisolation 4 auf einer Teillänge. Das Glimmschutzsystem 9 weist den Außenglimmschutz 5 und den Endenglimmschutz 8 auf.

Ein Lack umhüllt die Hauptisolation 4 des elektrischen Leiters 3, wobei der Lack sich ausgehend von dem dem Ständerblechpaket 2 abgewandten Ende des Außenglimmschutzes 5 über eine Teillänge der nicht vom Außenglimmschutz 5 bedeckten Hauptisolation 4 erstreckt. Der Lack weist ein Basisharz auf, dem zwei Füllstoffkomponenten zugesetzt sind. Die erste Füllstoffkomponente weist nanoskalige Titandioxidpartikel auf, die zweite Füllstoffkomponente weist teilleitfähige Partikel auf. Der Lack ist der erfindungsgemäße Glimmschutz, in diesem Beispiel ist der Glimmschutz ein Endenglimmschutz.

Ein Band umhüllt die Hauptisolation 4 des elektrischen Leiters 3, wobei das Band sich ausgehend von dem Ständerblechpaket 2 nicht vollständig über die Hauptisolation 4 erstreckt. Das Band ist von einem Basisharz durchtränkt, dem eine Füllstoffkomponente zugesetzt ist, wobei die Füllstoffkomponente nanoskalige Siliziumdioxidpartikel aufweist. Das Band zusammen mit dem Basisharz ist der erfindungsgemäße Glimmschutz, in diesem Beispiel ist der Glimmschutz ein Außenglimmschutz.

Ein Lack umhüllt die Hauptisolation 4 des elektrischen Leiters 3, wobei der Lack sich ausgehend von dem Ständerblechpaket 2 nicht vollständig über die Hauptisolation 4 erstreckt. Der Lack weist ein Basisharz auf, dem eine Füllstoffkomponente zugesetzt ist, wobei die Füllstoffkomponente nanoskalige Aluminiumoxidpartikel aufweist. Der Lack ist der erfindungsgemäße Glimmschutz, in diesem Beispiel ist der Glimmschutz ein Außenglimmschutz.

## Patentansprüche

1. Glimmschutzsystem (9) für eine Hochspannungsmaschine, mit einem Umhüllkörper für einen stromführenden Leiter (3) der Hochspannungsmaschine,
wobei der Umhüllkörper ein Basisharz aufweist, dem mindestens eine Partikel aufweisende Füllstoffkomponente zugesetzt ist,
wobei die Partikel der mindestens einen Füllstoffkomponente eine nanoskalige Dimension haben.

2. Glimmschutzsystem (9) gemäß Anspruch 1,
wobei das Glimmschutzsystem (9) einen Lack aufweist, der das Basisharz aufweist.

3. Glimmschutzsystem (9) gemäß Anspruch 1,
wobei das Glimmschutzsystem (9) ein poröses Band aufweist, das von dem Basisharz durchtränkt ist.

4. Glimmschutzsystem (9) gemäß Anspruch 1 oder 2,
wobei das Basisharz als ein Gießharz verwendet ist.

5. Glimmschutzsystem (9) gemäß Anspruch 1 oder 3,
wobei das Basisharz als ein Tränkharz verwendet ist.

6. Glimmschutzsystem (9) gemäß einem der Ansprüche 1 bis 5,
wobei das Basisharz ein Epoxidharz mit einem Anhydrid als Härter ist.

7. Glimmschutzsystem (9) gemäß einem der Ansprüche 1 bis 6,
wobei die Partikel ein Metalloxid und/oder ein Halbmetalloxid aufweisen, insbesondere Titandioxid, Aluminiumoxid und/oder Siliziumdioxid.

8. Glimmschutzsystem (9) gemäß einem der Ansprüche 1 bis 7,
wobei die Partikel durch ein flammenpyrolytisches Verfahren hergestellt sind.

9. Glimmschutzsystem (9) gemäß einem der Ansprüche 1 bis 7,
wobei die Partikel in situ im Basisharz oder in situ in einer Komponente des Basisharzes hergestellt sind.

10. Glimmschutzsystem (9) gemäß einem der Ansprüche 1 bis 8,
wobei der Füllstoff und dessen Konzentration im Basisharz so gewählt sind, dass die Mischung aus dem Basisharz und dem Füllstoff ein vorherbestimmtes Fließverhalten hat.

11. Glimmschutzsystem (9) gemäß einem der Ansprüche 1 bis 10,
wobei das Glimmschutzsystem (9) ein Außenglimmschutz (5) ist.

12. Glimmschutzsystem (9) gemäß einem der Ansprüche 1 bis 10,
wobei das Glimmschutzsystem (9) ein Endenglimmschutz (8) ist.

13. Glimmschutzsystem (9) gemäß Anspruch 12,
wobei der Endenglimmschutz (8) mindestens zwei Füllstoffkomponenten aufweist,
wobei die Partikel mindestens einer der anderen Füllstoffkomponenten ein halbleitendes Material aufweisen, insbesondere Siliziumcarbid.
